# EUROPEAN PATENT SPECIFICATION

(11) **EP 1 336 237 B1**
(45) Date of publication and mention of the grant of the patent: **20.09.2006**
(21) Application number: 01996917.9
(22) Date of filing: 13.11.2001
(51) Int. Cl.: H02K 19/28, H02K 19/36, H02P 9/30

(54) **VOLTAGE REGULATOR FOR AN AC GENERATOR**
SPANNUNGSREGLER FÜR EINEN WECHSELSTROMGENERATOR
REGULATEUR DE TENSION POUR ALTERNATEUR

(30) Priority: 15.11.2000 IT VI20000252
(43) Date of publication of application: 20.08.2003
(73) Proprietor: Carraro, Diego, 36100 Vicenza (IT)
(72) Inventor: Carraro, Diego, 36100 Vicenza (IT)
(74) Representative: Bonini, Ercole
(86) International application number: PCT/EP2001/013133
(87) International publication number: WO 2002/041475

(56) References cited:
- JP-A- 49 078 114
- US-A- 4 786 853
- PATENT ABSTRACTS OF JAPAN vol. 017, no. 578 (E-1450), 20 October 1993 (1993-10-20) & JP 05 168207 A (KOKUSAN DENKI CO LTD), 2 July 1993 (1993-07-02)

## Description

The present invention relates to a voltage regulator for an alternated current (AC) with excitation of the kind with capacitor provided with a self- regulating device of the generated voltage.

It is well known that an AC generator or alternator is a synchronous rotary electrical machine transforming the mechanical power of the shaft into electrical power. More particularly the electrical power is generated in the form of sinusoidal AC having a frequency rigidly connected to the operative velocity of the machine.

In such a machine the rotor has the function of inductor; that is to generate the magnetic filled field with the primary and auxiliary induced windings of the stator, respectively.

More particularly the rotor comprises a rotary body on winch an excitation winding is wound, closed on one or more rectifying diodes to form the inductor circuit.

As to the stator, it comprises a body on which a primary winding feeding the load and an auxiliary winding closed on a capacitor are wound and arranged orthogonal to one another.

When the machine is being rotated, the residual magnetic field of the rotor body generates in the auxiliary circuit a current increasing the current in the inductor circuit so as to increase the induction flux. Increase of the induction flux increases the current in the auxiliary circuit that in turn causes an increase of current in the inductor circuit so as to increase further the induction flux. In this way a positive reaction is initiated, leading the machine to increase the induction flux until a maximum value is reached corresponding to the saturation value of the material of the rotor body.

The main drawback of these machines consists in that the output voltage applied to the load is varying with the variation of the load.

Indeed it is known that in the idling operation the induction flux of the machine is produced only by the magneto motive force generated by the inductor circuit and is directly proportional to the induced electro motive force, while in the loaded operation the induction flux depends also from the armature reaction of the primary winding.

Such a reaction occurs in the inductor circuit where it is a function of the current intensity in the armature circuit and of the phase difference between current and its induced electro motive force and in the auxiliary circuit as well. More particularly when the primary winding is closed on a merely resistive load, the current circulating on the excitation circuits tend to decrease opposed by the action of the auxiliary circuit.

The machine therefore is led to work in such a balance condition as to warrant the desired voltage to the load.

When the primary winding is closed on a mainly inductive load, the current on the load, the conditions being equal, causes an armature reaction on the auxiliary circuit lower than the preceding case.

Consequently the machine is led to work in a balance condition characterized by a voltage lower than the desired voltage.

On the contrary when the primary winding is closed on a mainly capacity load, the machine behaves in a complementary mode to the preceding case, leading to work in a balance condition characterized by a higher voltage relative to the desired voltage.

Another drawback consists in that the output voltage applied to the load varies considerably when the number of revolutions of the rotor is varying.

A last but not least drawback consists in that the output voltage varies according to the variation of the operative temperature of the generator, which increases as it is well known, during generator operation in view of the losses due to the Joule effect.

A voltage regulator according to the preamble of claim 1 is disclosed in document JP 49 078 114.

The object of the present invention is overcome the foregoing drawbacks.

More particularly a first object of the invention is to provide a voltage regulator for an AC generator which is self ― regulating the voltage applied to the load so as to keep the voltage on the load substantially constant when the load is varying.

Another object is to provide a self- regulating device having a cost weighing in a limited quantity on the total cost of the generator.

It is a further object to provide a device that can be applied also to already installed generators generally lacking of a device regulating the output voltage.

Still another object is to provide a strong and reliable regulating device to be applied to a generator.

The foregoing objects are attained by a voltage regulator for an AC generator with capacitor excitation the main features of which are according to claims 1. The control device may be indifferently made according to an analog or digital or even mixed technology.

According to a preferred embodiment of the invention, the switch piloted by a control device is series connected to the auxiliary winding and the excitation capacitor.

According to a further embodiment of the invention, the switch is series connected to a further generally capacitive impedance and both are paralleled relative to the excitation capacitor.

According to another embodiment of the invention the switch is directly paralleled to the excitation capacitor.

Advantageously a generator provided with the regulator of the invention tolerates higher variations of velocity of the rotor unit in comparison with the known generators, so as to warrant generally constant output voltages.

Still advantageously the generator with the device of the invention allows to control the voltage applied to the load by acting on the current circulating on the auxiliary winding that is known to be of lower intensity in comparison with the other currents of the system, so as to allow control of great powers with little powers.

Further advantages and features of the invention will be better understood by reading the description of three preferred embodiments of the invention given as illustrative and non limiting examples, with reference to the accompanying sheets of drawings in which:
- Fig. 1 is a schematic illustration of a generator provided with a first embodiment of the device of the invention;
- Fig. 2 is a block diagram of the control device of the generator of Fig. 1;
- Fig. 3 shows a particular embodiment of the switch of the device shown in Fig. 1;
- Fig. 4 is a graph relative to voltages and currents plotted during operation of the generator of Fig. 1 excited according to the diagrams of Fig. 7 or Fig. 8;
- Fig. 5 is a block diagram of a version of the regulator of Fig. 1;
- Fig. 6 is a block diagram of another version of the regulator of Fig. 1;
- Fig. 7 is a basic scheme of the auxiliary winding with the switch of the invention series arranged with said winding;
- Fig. 8 shows a version of the device of the invention wherein the switch is series connected to a capacitor and both are paralleled with the excitation capacitor;
- Fig. 9 shows a further version of the device of the invention wherein the switch of the invention is arranged directly in parallel with the excitation capacitor belonging to the auxiliary circuit; and
- Fig. 10 shows the development of voltage and current of the switch during the opening and closing periods of the switch in each half cycle according to the circuit of Fig. 9.

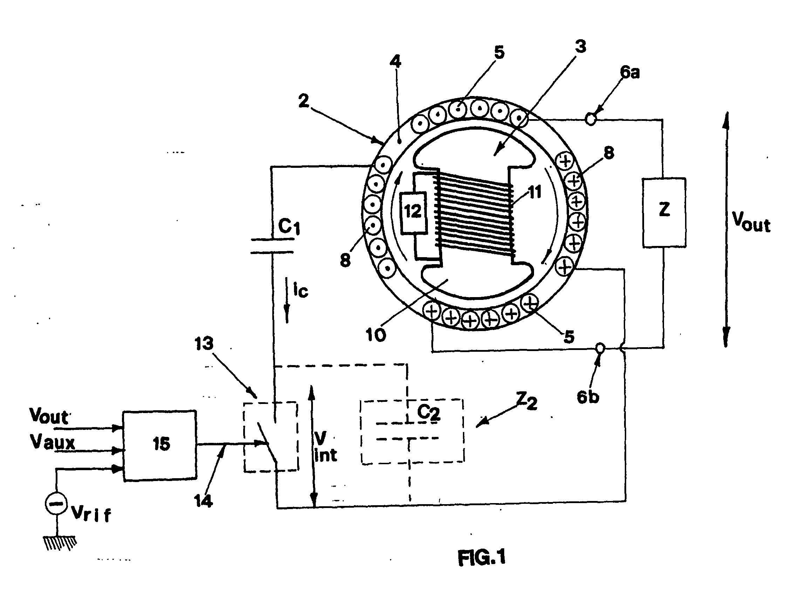

The AC generator with capacitor excitation of the present invention is diagrammatically shown in Fig. 1 where it is generally indicated with reference numeral 1 and substantially comprises a stator unit 2 and a rotor unit 3.

The stator unit 2 comprises a stator body 4 in the slots of which a single phase armature winding 5 is wound, having a couple of terminals 6a, 6b connected to the load Z and an auxiliary winding 8 arranged at 90 electrical degrees to the armature winding 5, and electrically connected to a capacitor C₁.

The rotor unit 3 comprises a rotary body 10 on which an excitation winding 11 is wound and electrically connected to a rectifying circuit generally indicated with 12.

According to the invention the self- regulating device of the generator 1 comprises a piloted switch 13 series arranged to the auxiliary winding 8 and capacitor C₁, having a control input 14 electrically connected to a control device generally indicated with 15, opening or closing switch 13 in order to prevent or allow circulation of current IC in the auxiliary winding 8 as a function of the voltage variations across the armature winding 5 and load Z.

Opening and closing the piloted switch 13 causes the current IC circulating in the auxiliary winding 8 to be varied, so as to vary the electro motive force induced on the excitation winding 11 and therefore on the load Z.

One can see that by varying properly the opening and closing duration ratio of the switch, a variable excitation current in the auxiliary winding is obtained, so as to induce in the excitation circuit such a current as to keep constant the voltage on the load.

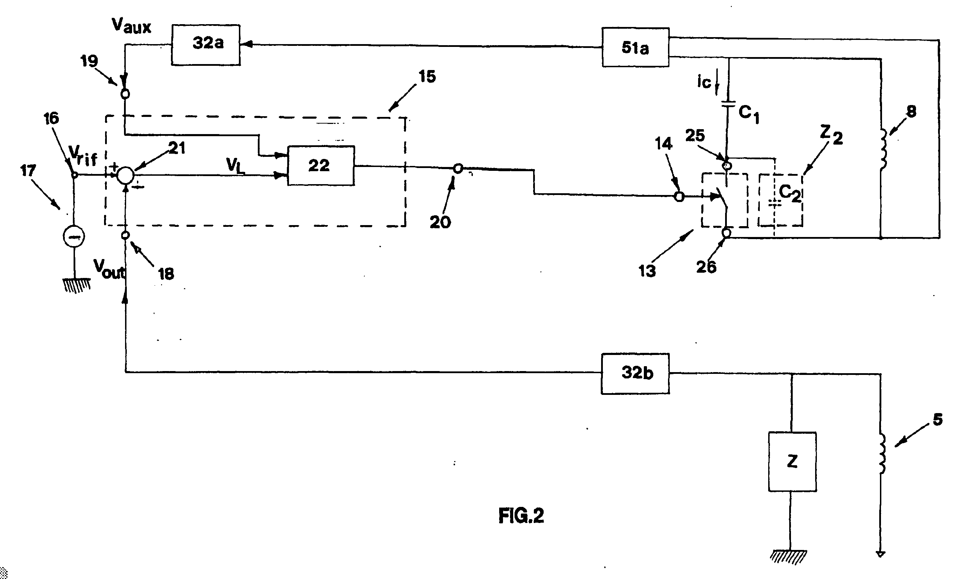

The control device 15 shown in detail in Fig. 2, controls opening of switch 13 when the voltage across the armature winding 5 is different from the set voltage. More particularly the device controls opening of switch 13 when voltage across the auxiliary winding 8 is higher than the difference between a reference voltage and the average value in one half cycle of the voltage across the armature winding 5.

The control device setting the duration of opening and closing time of the switch in one half cycle comprises:
- a first input 16 electrically connected to a reference voltage generator 17;
- a second input 18 connected across the armature winding 5;
- a third input 19 electrically connected across the auxiliary winding 8 through differential devices 51a;
- and an output 20 connected to the control input 14 of the piloted switch 13.

As to the first 16 and second 18 input, they are electrically connected to the inputs of a summing block 21 supplying an output signal proportional to the difference between inputs 18 and 16 and constituting the first input of a comparator block 22.

With regard to the third input 19, it is electrically connected to the other input of the comparator block 22, which compares the voltages at its inputs and supplies an output signal 20 of logic type which is fed back to the output of the control device 15 and controls opening or closing of switch 13.

More particularly the comparator 22 controls closure of a switch 13 when the voltage across the auxiliary winding 8 is lower than the voltage fed at the output of the summing block 21.

With regard now to the piloted switch 13, it behaves like a bi-directional power switch controlled through the control terminal 14.

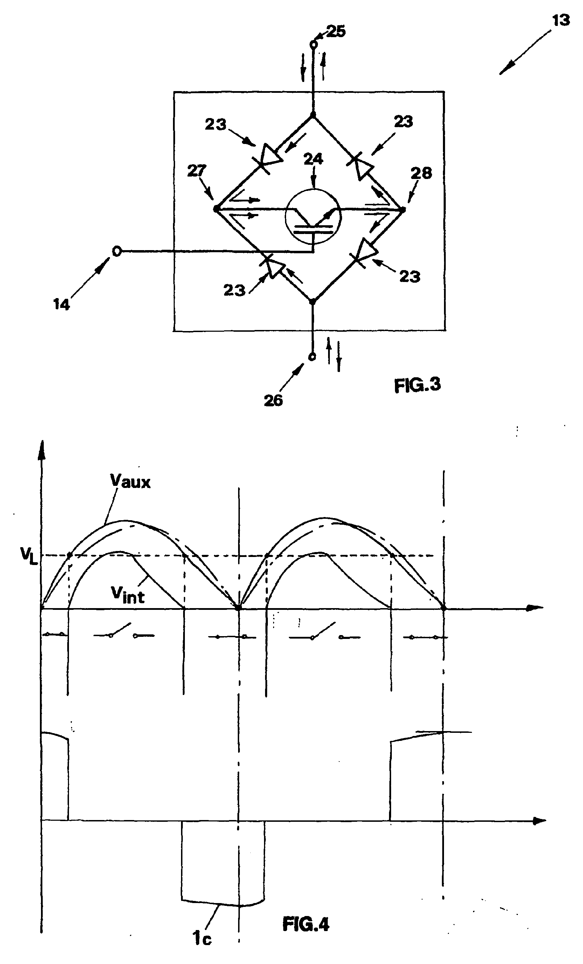

More particularly as shown in detail in the example of Fig. 3, the bi-directional switch comprises a plurality of rectifying diodes 23 mutually connected to a power transistor 24, preferably consisting of an IGBT or a MOSFET or a bipolar transistor.

More particularly the diodes 23 constitute a GRAETZ bridge having the input terminals 25, 26 electrically connected across the auxiliary winding 8 and the positive 27 and negative 28 output terminals connected to collector and emitter of the power transistor 24 respectively.

As to the control terminal 14, it consists of the base of the power transistor 24 which allows or prevents passage of current between collector and emitter.

It is important to note that the described configuration allows to use a single power transistor that it is known to be a unidirectional controlled switch to obtain a bi-directional controlled switch.

It is also to be noted that opening of switch 13 causes reaction of the auxiliary winding 8 generating a reaction voltage that is known to be proportional to the variation of the current ic circulating in said winding and could cause damage of transistor 24 if the latter was not properly dimensioned.

In order to remove such a limitation the invention provides for a double pole Z₂, shown in Fig. 1, connected in parallel to switch 13 keeping even at open switch a minimum value of current ic circulating in the auxiliary winding 8. More particularly the double pole Z₂ has across its terminals a generally capacitive impedance preferably consisting of a capacitor C₂.

In this way the auxiliary winding 8 has always a capacitive load applied across its terminals, which is variable according to the opening or closing position of switch 13.

The capacitive load varies from a maximum value C₁ when the switch is closed, to a minimum value equal to (C₁xC₂)/(C₁+C₂) when the switch is open. This allows to have alternatively a maximum excitation and a minimum excitation of the excitation winding 4 at the maximum and minimum capacitive load applied to the auxiliary winding 8.

It is important to note also that voltages taken from windings 8 and 5 and used by the control device 15 are all previously rectified through a plurality of rectifying circuits 32a and 32b of a kind known per se which therefore will be not described in detail hereinafter.

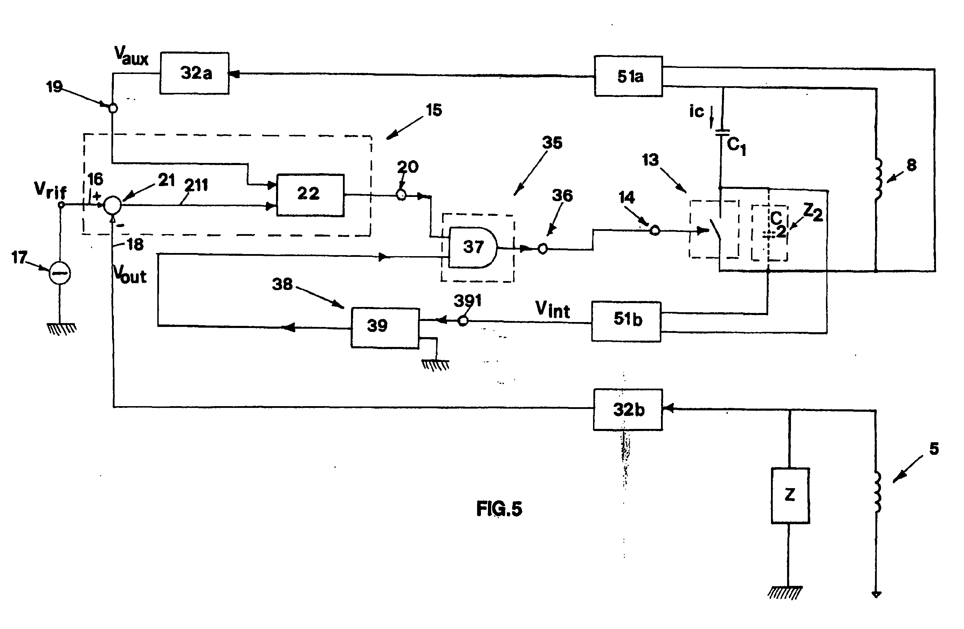

The operation of the generator provided with the device of the invention will be now described in greater detail, making reference to the circuit of Fig. 2 with the aid of the graph shown in Fig. 4 illustrating the wave forms relative to the current ic circulating on the auxiliary winding 8 and the rectified voltages across the auxiliary winding Vₐᵤₓ and switch Vᵢₙₜ respectively as a function of the opening and closing state of switch 13.

More particularly Fig. 4 shows the development:
- with broken line of the current ic circulating in the auxiliary winding 8;
- with dash dot line of voltage Vₐᵤₓ shown rectified across the auxiliary winding 8;
- with solid line the voltage Vᵢₙₜ shown rectified across the piloted switch 13; and
- with dotted line the value V_{L} of the voltage at the output of the summing block 21.

As one can see, the control device 15 controls opening of switch 13 as soon as the voltage across the auxiliary winding Vₐᵤₓ is greater than the reference voltage V_{L}.

At the same time of opening switch 13, the current ic on the auxiliary winding 8 is annulled while voltage of switch Vᵢₙₜ that previously was clearly null, is increasing across the switch 13.

It is to be noted that opening of switch 13 may generate a number of oscillations although signal Vᵢₙₜ remains substantially with a sinusoidal development

The closing control of switch 13 is given by the control device 15 as soon as voltage Vₐᵤₓ across the auxiliary winding 8 becomes lower than the reference voltage V_{L}.

Opening and closing of switch 13 causes a modulation of the current ic circulating in the auxiliary winding 8 and a consequent variation of excitation of generator 1 that is known to cause a variation of voltage across the load Z.

A constructional version shown in detail in Fig. 5 according to the invention is different from the preceding embodiment because the switch 13 is brought to the closure position only when voltage at its terminals Vᵢₙₜ is close to zero.

This arrangement allows advantageously to use as a switch a power transistor 24 having characteristics of maximum admissible current lower than the previously described solution, so as to decrease power dissipation and total cost of the regulator.

Indeed if closure of switch 13 occurs when a high voltage Vᵢₙₜ is present at its terminals, transistor 24 is heated and if it is not properly dimensioned, can be irreparably damaged.

To this purpose the generator 4 of the invention comprises a device 35 enabling closure of switch 13 arid having the output 36 electrically connected to the control terminal 14 for opening and closing the switch. The enabling device consists of an AND logic gate 37 combining output 20 of the control device 15 with the signal coming from a detector block 38 of the zero crossings of voltage across switch Vᵢₙₜ. This voltage Vᵢₙₜ is the output voltage from the differential device 51 b at whose input voltages across the switch 13 are coming.

The zero crossing detector 38 of voltage Vᵢₙₜ across the switch 13 consists of a comparator 39 having at one input 391 the rectified voltage V_{Int} across switch 13 and at the other input a reference voltage substantially equal to zero.

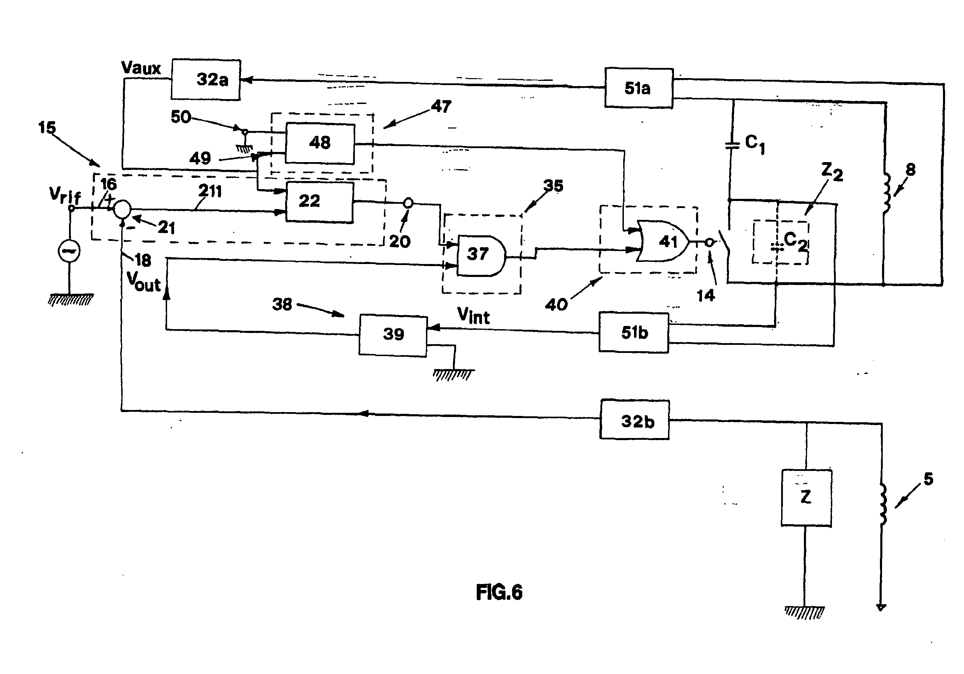

A further constructional version shown in detail in Fig.6 according to the invention is different from the preceding one because the switch 13 is closed at least once at each half wave of the voltage across the auxiliary winding 8, even if the control device 15 does not send the signal of closing the switch 13.

To this purpose the generator of the invention is provided with an override device 40 of the closure of the piloted switch 13 having its output electrically connected to the control terminal 14 of switch 13.

The override device 40 consists of an OR gate 41 combining the output signal 36 of the enabling device 35 with the signal coming from a zero crossing detector 47 of the voltage Vₐᵤₓ across the auxiliary winding 8.

The zero crossing detector 47 of voltage Vₐᵤₓ across the auxiliary winding 8 also consists of a comparator 48 having at one input 49 the rectified voltage Vₐᵤₓ across the auxiliary winding 8 and at the other input 50 a reference Voltage substantially equal to zero.

From the foregoing it is clear that the generator of the invention attains the above mentioned objects.

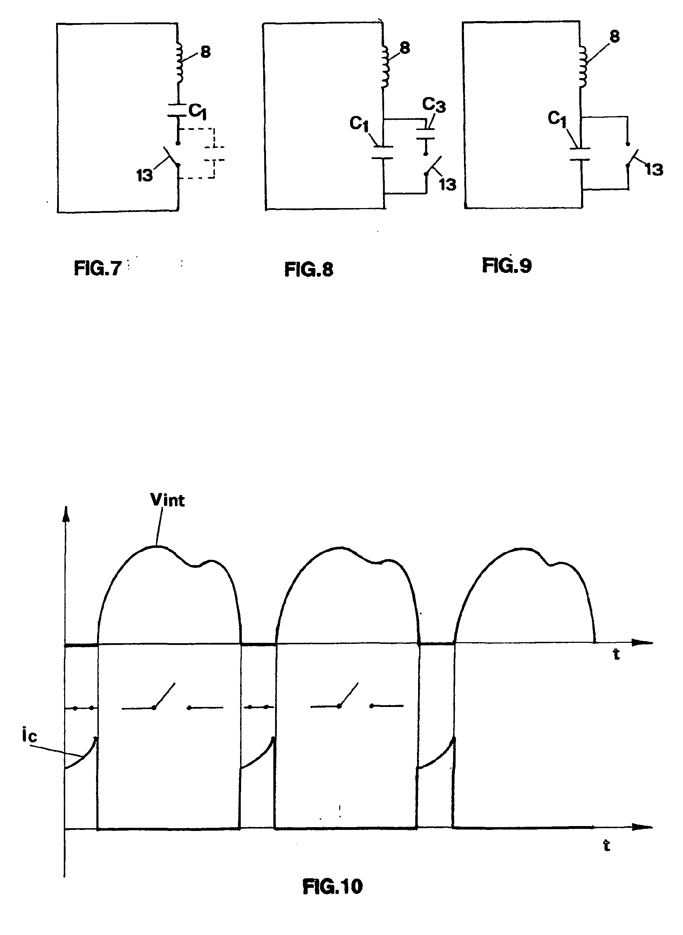

According to a constructional version diagrammatically shown in Fig. 8, the piloted switch 13 instead of being series connected as shown in figs. 1 and 7 to the auxiliary winding 8 and the excitation capacitor C₁, is arranged in parallel to the excitation capacitor C₁.

More particularly the parallel leg of the switch 13 has another capacitor C₃ series connected to switch 13. Also in this circuit condition opening of the switch occurs by the control device when voltage across the auxiliary winding Vₐᵤₓ is equal to or higher than a limit voltage V_{L} given by the control device. Closure of the switch occurs always when the voltage at its terminals is nearly null. The piloting action of the switch according to this version occurs substantially in the same way of the switch series arranged according to the circuit of Figs. 1 and 7.

According to another possible version of the invention diagrammatically shown in Fig. 9, switch 13 is arranged in parallel to the exciting capacitor C₁, both being in turn series connected to the auxiliary winding 8.

Under these circuit conditions, while the switch is always being closed by the control device when voltage at its terminals is nearly null, opening of the switch on the contrary occurs when the control device of the switch detects that the current crossing the switch is higher than a predetermined limit set by the control device.

The development of tension and current of the switch in the embodiment of fig. 9 are shown in the diagrams of Fig. 10 showing the development of these electrical quantities during the opening and closing stage of the switch.

Although the invention was described with reference to the accompanying sheets of drawings, it may undergo in the constructional stage modifications that are all falling within the inventive principle set forth in the appended claims and therefore covered by the present patent.

## Claims

1. A voltage regulator for an AC generator (1) with capacitor excitation comprising:
- a stator unit (2) having a stator body (4) on which at least an armature winding (5) is wound, having at least a couple of terminals (6a, 6b) connected to a load (Z) and at least an auxiliary winding (8) substantially arranged at 90 electrical degrees relative to said armature winding (5) and electrically series connected to at least a capacitor (C₁);
- a rotor unit (3) having a rotary body (10) on which at least an excitation winding (11) is wound, said excitation winding being electrically connected to at least a rectifying circuit;
- at least a switch (13) electrically connected to said auxiliary winding (8) and to said at least one capacitor (C₁);
- a control device (15) opening or closing said switch (13) to regulate the circulation of current (ic) in said auxiliary winding (8) as a function of the voltage variations across said armature winding (5),
**characterized in that** said control device opens said switch when voltage across the auxiliary winding (Vₐᵤₓ) is not lower than a limit voltage (V_{L}) set by the control device, and **in that** said limit voltage (V_{L}) is determined by the difference between a reference voltage (V_{rif}) and the average value in one half cycle of the voltage across the armature winding (5).

2. The regulator according to claim 1) **characterized in that** said switch is closed by the control device when the voltage across its terminals is nearly null.

3. The regulator according to claim 1) **characterized in that** said switch is series connected to said auxiliary winding (Fig. 4. Fig. 7).

4. The regulator according to claim 2) **characterized in that** a double pole (Z₂) is arranged in parallel to said switch and has a substantially capacitive impedance at its terminals.

5. The regulator according to claim 4) **characterized in that** said double pole (Z₂) consists of at least a capacitor (C₂).

6. The regulator according to claim 1) **characterized in that** said switch is series connected to at least a further generally capacitive impedance, both being arranged in parallel to said capacitor C₁ (Fig. 8).

7. The regulator according to claim 4) **characterized in that** said generally capacitive impedance consists of at least a capacitor (C₃) (Fig.8).

8. The regulator according to claim 1) **characterized in that** said switch is directly connected in parallel with said excitation capacitor (Fig. 9).

9. The regulator according to claim 2) **characterized in that** said control device (15) comprises:
- a first input (16) electrically connected to a generator of a reference voltage (17);
- a second input (18) electrically connected across said armature winding (5);
- a third input (19) electrically connected across said auxiliary winding (8);
- at least an output (20) electrically connected to said control input (14) of said piloted switch (13);
said output (20) controlling opening of said switch (13) when voltage (Vₐᵤₓ) across said auxiliary winding (8) is greater than the difference between the reference voltage (V_{rif}) and the average value in one half cycle of the voltage across said armature winding (5).

10. The regulator according to claim 9) **characterized in that** said control device (15) comprises a summing block (21) having an input electrically connected to said first input (16) and another input electrically connected to said second input (18), said summing block (21) supplying an output signal (211) proportional to the difference between said inputs and constituting an input of a comparator block (22) having another input electrically connected to said third input (19) and the output electrically connected to said output (20), said comparator block (22) controlling the closure of said switch (13) when the voltage (Vₐᵤₓ) across said auxiliary winding (8) is lower than the voltage (V_{L}) supplied as output from said summing block. (21).

11. The regulator according to claim 9) or 10) **characterized in that** between said output (20) of said control device (15) and said control input (14) of said piloted switch (13), an enabling device (35) for the closure of said switch (13) is interposed, comprising:
- a first input electrically connected to a detector block (38) of the zero crossings of voltage (Vᵢₙₜ) across said switch (13);
- a second input electrically connected to output (20) of said control device (15);
- an output electrically connected to said control input (14) of said piloted switch (13);
said enabling device (35) enabling closure of said piloted switch (13) only when voltage (Vᵢₙₜ) across said piloted switch (13) is substantially zero (Fig. 5).

12. The regulator according to claim 11) **characterized in that** said zero crossing detector (38) of the voltage (Vᵢₙₜ) across said piloted switch (13) consists of a comparator (39) having at one input (391) the voltage across said piloted switch (13) and at the other input a reference voltage substantially equal to zero.

13. The regulator according to any of claims 9) to 12) **characterized in that** between said output of said control device (15) and said control input (14) of said piloted switch (13), an override device (40) of the closure of switch (13) is interposed comprising:
- a first input electrically connected to a zero crossing detecting circuit (47) of the voltage (Vₐᵤₓ) across the auxiliary winding (8);
- a second input electrically connected to the output of said control device (15) of the closure of said switch (13);
- an output electrically connected to said control input (14) of said piloted switch (13):
said override device (40) enabling closure of said piloted switch (13) when voltage (Vₐᵤₓ) across said auxiliary winding (8) is substantially zero (Fig. 6).

14. The regulator according to claim 13) **characterized in that** said override device (40) consists of an OR logic gate.

15. The regulator according to claim 13 or 14) **characterized in that** said zero crossing detecting circuit (47) of voltage (Vₐᵤₓ) across said auxiliary winding (8) consists of a comparator (48) having at one input (49) the voltage across said auxiliary winding (8) and at the other input a reference voltage substantially equal to zero.

16. The regulator according to claim 1) **characterized in that** said at least one piloted switch (13) comprises a bi-directional power switch.

17. The regulator according to claim 16) **characterized in that** said bi-directional power switch consists of a bridge of diode rectifier (23) having the input terminals (25, 26) electrically connected, through said capacitor, to said auxiliary winding (8) and the output terminals (27, 28) electrically connected to the collector and the emitter of at least a power transistor (24) having its base constituting said control input (14) of said piloted switch (13).

18. The regulator according to claim 17) **characterized in that** said at least one power transistor (24) has the collector electrically connected to the positive terminal (27) of said diode rectifying bridge (23) and the emitter electrically connected to the negative terminal (28) of said diode rectifying bridge (23).

19. The regulator according to any of claims 9) to 16) **characterized in that** a rectifying circuit (32b) is interposed between said second input (18) of said control device and said armature winding (5).

20. The regulator according to any of claims 9) to 16) **characterized in that** a second rectifying circuit (32a) is interposed between said second input (18) and said auxiliary winding (8).

21. The regulator according to any of the preceding claims **characterized in that** said piloted switch (13) is closed at least once for each half wave of voltage (Vₐᵤₓ) across the auxiliary winding (8).

## Patentansprüche

1. Ein Spannungsregler für einen Wechselstromgenerator (1) mit Kondensatorerregung, Folgendes umfassend:
- eine Statoreinheit (2) mit einem Statorkörper (4), um dem wenigstens eine Ankerwicklung (5) gewunden ist, mit wenigstens einem Paar Endverschlüsse (6a, 6b), die an eine Last (Z) angeschlossen sind, und mit wenigstens einer Zusatzwicklung (8), die im Wesentlichen auf 90 elektrische Grade bezüglich der Ankerwicklung (5) positioniert sowie an wenigstens einen Kondensator (C₁) elektrisch reihengeschaltet ist;
- eine Rotoreinheit (3) mit einem Rotationskörper (10), um den wenigstens eine Erregungswicklung (11) gewunden ist, wobei diese Erregungswicklung elektrisch an wenigstens einen Gleichrichterschaltkreis angeschlossen ist;
- wenigstens einen Schalter (13), der elektrisch an die Zusatzwicklung (8) angeschlossen ist sowie an den wenigstens einen Kondensator (C₁);
- eine Steuervorrichtung (15), die den Schalter (13) öffnet oder schließt, um den Stromlauf (ic) in der Zusatzwicklung (8) in Abhängigkeit von den Spannungsveränderungen durch die Ankerwicklung (5) zu regulieren,
**dadurch gekennzeichnet, dass** die Steuervorrichtung den Schalter öffnet, wenn die Spannung durch die Zusatzwicklung (Vₐᵤₓ) nicht niedriger ist als eine durch die Steuervorrichtung eingestellte Grenzspannung (V_{L}), **und dadurch, dass** die Grenzspannung (V_{L}) durch die Differenz zwischen einer Bezugsspannung (V_{rif}) und dem Mittelwert in einem halben Zyklus der Spannung durch den Ankerwicklung (5) definiert wird.

2. Der Regler gemäß Patentanspruch 1), **dadurch gekennzeichnet, dass** der Schalter durch die Steuervorrichtung geschlossen wird, wenn die Spannung durch seine Endverschlüsse beinahe null ist.

3. Der Regler gemäß Patentanspruch 1), **dadurch gekennzeichnet, dass** der Schalter in Reihe an die Zusatzwicklung geschaltet ist (Fig. 4, Fig. 7).

4. Der Regler gemäß Patentanspruch 2), **dadurch gekennzeichnet, dass** ein Doppelpol (Z₂) parallel zu dem Schalter angeordnet ist und an seinen Endverschlüssen eine im Wesentlichen kapazitive Impedanz hat.

5. Der Regler gemäß Patentanspruch 4), **dadurch gekennzeichnet, dass** der Doppelpol (Z₂) aus wenigstens einem Kondensator (C₂) besteht.

6. Der Regler gemäß Patentanspruch 1), **dadurch gekennzeichnet, dass** der Schalter in Reihenschaltung an wenigstens eine weitere, generell kapazitive Impedanz angeschlossen ist, und beide parallel zum Kondensator (C₁) angeordnet sind (Fig. 8).

7. Der Regler gemäß Patentanspruch 4), **dadurch gekennzeichnet, dass** die generell kapazitive Impedanz aus wenigstens einem Kondensator (C₃) besteht (Fig. 8).

8. Der Regler gemäß Patentanspruch 1), **dadurch gekennzeichnet, dass** der Schalter direkt in Parallelschaltung mit dem Erregungskondensator verbunden ist (Fig. 9).

9. Der Regler gemäß Patentanspruch 2), **dadurch gekennzeichnet, dass** die Steuervorrichtung (15) Folgendes umfasst:
- einen ersten Eingang (16), der elektrisch mit einem Bezugsspannungsgenerator (17) verbunden ist;
- einen zweiten Eingang (18), der elektrisch über die Ankerwicklung (5) angeschlossen ist;
- einen dritten Eingang (19), der elektrisch über die Zusatzwicklung (8) angeschlossen ist;
- wenigstens einen Ausgang (20), der elektrisch an den Steuereingang (14) des vorgesteuerten Schalters (13) angeschlossen ist;
wobei der Ausgang (20) die Öffnung des Schalters (13) steuert, wenn die Spannung (Vₐᵤₓ) durch die Zusatzwicklung (8) höher ist als die Differenz zwischen der Bezugsspannung (V_{rif}) und dem Mittelwert in einem halben Zyklus der Spannung durch die Ankerwicklung (5).

10. Der Regler gemäß Patentanspruch 9), **dadurch gekennzeichnet, dass** die Steuervorrichtung (15) einen Summierblock (21) umfasst mit einem elektrisch an den ersten Eingang (16) angeschlossenen Eingang und einem weiteren, an den zweiten Eingang (18) angeschlossenen Eingang, wobei der Summierblock (21) ein Ausgangssignal (211) liefert, das proportional ist zur Differenz zwischen den Eingängen und das einen Eingang eines Komparatorblocks (22) bildet, der einen anderen, elektrisch an den dritten Eingang (19) angeschlossenen Eingang hat und den Ausgang elektrisch an den Ausgang (20) angeschlossen hat, wobei der Komparatorblock (22) die Schließung des Schalters (13) steuert, wenn die Spannung (Vₐᵤₓ) durch die Zusatzwicklung (8) niedriger ist als die am Ausgang des Summierblocks (21) gelieferte Spannung (V_{L}).

11. Der Regler gemäß Patentanspruch 9) oder 10), **dadurch gekennzeichnet, dass** zwischen dem Ausgang (20) der Steuervorrichtung (15) und dem Steuereingang (14) des vorgesteuerten Schalters (13) eine Freigabevorrichtung (35) für das Schließen des Schalters (13) zwischengeschaltet ist, die Folgendes umfasst:
- einen ersten, elektrisch an einen Detektorblock (38) der Nulldurchgänge der Spannung (Vᵢₙₜ) durch den Schalter (13) angeschlossenen Eingang;
- einen zweiten, elektrisch an den Ausgang (20) der Steuervorrichtung (15) angeschlossenen Eingang;
- einen elektrisch an den Steuereingang (14) des vorgesteuerten Schalters (13) angeschlossenen Ausgang;
wobei der Freigabevorrichtung (35) die Schließung des vorgesteuerten Schalters (13) nur dann freigibt, wenn die Spannung (Vᵢₙₜ) durch den vorgesteuerten Schalter (13) im Wesentlichen Null beträgt (Fig. 5).

12. Der Regler gemäß Patentanspruch 11), **dadurch gekennzeichnet, dass** der Nulldurchgangsdetektor (38) der Spannung (Vᵢₙₜ) durch den vorgesteuerten Schalter (13) aus einem Komparator (39) besteht, der an einem Eingang (391) die Spannung durch den vorgesteuerten Schalter (13) hat und an dem anderen Eingang eine im Wesentlichen Null entsprechende Bezugsspannung.

13. Der Regler gemäß eines jeglichen der Patentansprüche 9) bis 12), **dadurch gekennzeichnet, dass** zwischen dem Ausgang der Steuervorrichtung (15) und dem Steuereingang (14) des vorgesteuerten Schalters (13) eine Umgehungsvorrichtung (40) für die Schließung des Schalters (13) eingefügt ist, die Folgendes umfasst:
- einen ersten, elektrisch an einen Nulldurchgangsdetektor-Schaltkreis (47) der Spannung (Vₐᵤₓ) durch die Zusatzwicklung (8) angeschlossenen Eingang;
- einen zweiten, elektrisch an den Ausgang der Steuervorrichtung (15) der Schließung von Schalter (13) angeschlossenen Eingang;
- einen elektrisch an den Steuereingang (14) des vorgesteuerten Schalters (13) angeschlossenen Ausgang;
wobei dieser Umgehungsvorrichtung (40) die Schließung des vorgesteuerten Schalters (13) freigibt, wenn die Spannung (Vₐᵤₓ) durch die Zusatzwicklung (8) im Wesentlichen Null beträgt (Fig. 6).

14. Der Regler gemäß Patentanspruch 13), **dadurch gekennzeichnet, dass** die Umgehungsvorrichtung (40) aus einer logischen ODER-Schaltung besteht.

15. Der Regler gemäß Patentanspruch 13) oder 14), **dadurch gekennzeichnet, dass** der Nulldurchgangsdetektor-Schaltkreis (47) der Spannung (Vₐᵤₓ) durch die Zusatzwicklung (8) aus einem Komparator (48) besteht, der an einem Eingang (49) die Spannung durch die Zusatzwicklung (8) hat und an dem anderen Eingang eine im Wesentlichen gleich Null lautende Bezugsspannung.

16. Der Regler gemäß Patentanspruch 1), **dadurch gekennzeichnet, dass** der wenigstens eine vorgesteuerte Schalter (13) einen bidirektionalen Leistungsschalter umfasst.

17. Der Regler gemäß Patentanspruch 16), **dadurch gekennzeichnet, dass** der bidirektionale Leistungsschalter aus einer Diodengleichrichterbrücke (23) besteht, deren Eingangs-Endverschlüsse (25, 26) elektrisch über den Kondensator an die Zusatzwicklung (8) angeschlossen sind, und deren Ausgangs-Endverschlüsse (27, 28) elektrisch an den Kollektor und an den Emitter von wenigstens einem Leistungstransistor (24) angeschlossen sind, dessen Basis den Steuereingang (14) des vorgesteuerten Schalters (13) bildet.

18. Der Regler gemäß Patentanspruch 17), **dadurch gekennzeichnet, dass** in dem wenigstens einen Leistungstransistor (24) der Kollektor elektrisch an den Pluspol (27) der Diodengleichrichterbrücke (23) angeschlossen und der Emitter elektrisch an den Minuspol (28) der Diodengleichrichterbrücke (23) angeschlossen sind.

19. Der Regler gemäß eines jeglichen der Patentansprüche von 9) bis 16), **dadurch gekennzeichnet, dass** ein Gleichrichtungsschaltkreis (32b) zwischen dem zweiten Eingang (18) der Steuereinheit und der Ankerwicklung (5) eingefügt ist.

20. Der Regler gemäß eines jeglichen der Patentansprüche von 9) bis 16), **dadurch gekennzeichnet, dass** ein zweiter Gleichrichtungsschaltkreis (32a) zwischen dem zweiten Eingang (18) und der Zusatzwicklung (8) eingefügt ist.

21. Der Regler gemäß eines jeglichen der vorstehenden Patentansprüche, **dadurch gekennzeichnet, dass** der vorgesteuerte Schalter (13) wenigstens ein Mal pro Halbwelle der Spannung (Vₐᵤₓ) durch die Zusatzwindung (8) geschlossen wird.

## Revendications

1. Un régulateur de tension pour un générateur AC (1) avec excitation par condensateur comprenant:
- une unité de stator (2) ayant un corps de stator (4) sur lequel est enroulé au moins un enroulement d'induit (5), ayant au moins une paire de bornes (6a, 6b) reliées à une charge (Z) et au moins un enroulement auxiliaire (8) positionné essentiellement à 90 degrés électriques par rapport audit enroulement d'induit (5) et relié électriquement en série à un moins un condensateur (C₁);
- une unité de rotor (3) ayant un corps rotatif (10) sur lequel est enroulé au moins un enroulement d'excitation (11), ledit enroulement d'excitation étant relié électriquement à au moins un circuit de redressement;
- au moins un interrupteur (13) relié électriquement audit enroulement auxiliaire (8) et audit au moins un condensateur (C₁);
- un dispositif de contrôle (15) ouvrant et fermant ledit interrupteur (13) apte à réguler la circulation de courant (ic) dans ledit enroulement auxiliaire (8) en fonction des variations de tension à travers ledit enroulement d'induit (5),
**caractérisé en ce que** ledit dispositif de contrôle ouvre ledit interrupteur quand la tension à travers l'enroulement auxiliaire (Vₐᵤₓ) n'est pas inférieure à une tension limite (V_{L}) réglée par le dispositif de contrôle, et **en ce que** ladite tension limite (V_{L}) est déterminée par la différence entre une tension de référence (V_{rif}) et la valeur moyenne dans un demi-cycle de la tension à travers l'enroulement d'induit (5).

2. Le régulateur selon la revendication 1) **caractérisé en ce que** ledit interrupteur est fermé par le dispositif de contrôle quand la tension à travers ses bornes est presque nulle.

3. Le régulateur selon la revendication 1) **caractérisé en ce que** ledit interrupteur est relié en série audit enroulement auxiliaire (Fig. 4, Fig. 7).

4. Le régulateur selon la revendication 2) **caractérisé en ce qu'**un double pôle (Z₂) est positionné en parallèle par rapport audit interrupteur et a essentiellement une impédance capacitive sur ses bornes.

5. Le régulateur selon la revendication 4) **caractérisé en ce que** ledit double pôle (Z₂) consiste en au moins un condensateur (C₂).

6. Le régulateur selon la revendication 1) **caractérisé en ce que** ledit interrupteur est relié en série à au moins une ultérieure impédance généralement capacitive, les deux étant positionnés en parallèle par rapport audit condensateur C₁ (Fig. 8).

7. Le régulateur selon la revendication 4) **caractérisé en ce que** ladite impédance généralement capacitive consiste en au moins un condensateur (C₃) (Fig. 8).

8. Le régulateur selon la revendication 1) **caractérisé en ce que** ledit interrupteur est relié directement en parallèle avec ledit condensateur d'excitation (Fig. 9).

9. Le régulateur selon la revendication 2) **caractérisé en ce que** ledit dispositif de contrôle (15) comprend :
- une première entrée (16) reliée électriquement à un générateur d'une tension de référence (17);
- une deuxième entrée (18) reliée électriquement à travers ledit enroulement d'induit (5);
- une troisième entrée (19) reliée électriquement à travers ledit enroulement auxiliaire (8);
- au moins une sortie (20) reliée électriquement à ladite entrée de contrôle (14) dudit interrupteur piloté (13);
ladite sortie (20) contrôlant l'ouverture dudit interrupteur (13) quand la tension (Vₐᵤₓ) à travers ledit enroulement auxiliaire (8) est supérieure à la différence entre la tension de référence (V_{rif}) et la valeur moyenne dans un demi-cycle de la tension à travers ledit enroulement d'induit (5).

10. Le régulateur selon la revendication 9) **caractérisé en ce que** ledit dispositif de contrôle (15) comprend un bloc sommateur (21) ayant une entrée reliée électriquement à ladite première entrée (16) et une autre entrée reliée électriquement à ladite deuxième entrée (18), ledit bloc sommateur (21) fournissant un signal de sortie (211) proportionnel à la différence entre lesdites entrées et constituant une entrée d'un bloc de comparateur (22) ayant une autre entrée reliée électriquement à ladite troisième entrée (19) et la sortie reliée électriquement à ladite sortie (20), ledit bloc de comparateur (22) contrôlant la fermeture dudit interrupteur (13) quand la tension (Vₐᵤₓ) à travers ledit enroulement auxiliaire (8) est inférieure à la tension (V_{L}) fournie en sortie dudit bloc sommateur (21).

11. Le régulateur selon les revendications 9) ou 10) **caractérisé en ce qu'**entre ladite sortie (20) dudit dispositif de contrôle (15) et ladite entrée de contrôle (14) dudit interrupteur piloté (13), est interposé un dispositif de déclenchement (35) pour la fermeture dudit interrupteur (13) comprenant:
- une première entrée reliée électriquement à un bloc détecteur (38) des traversées zéro de la tension (Vᵢₙₜ) à travers ledit interrupteur (13);
- une deuxième entrée reliée électriquement à la sortie (20) dudit dispositif de contrôle (15);
- une sortie reliée électriquement à ladite entrée de contrôle (14) dudit interrupteur piloté (13);
ledit dispositif de déclenchement (35) qui ne valide la fermeture dudit interrupteur piloté (13) que quand la tension (Vᵢₙₜ) à travers ledit interrupteur piloté (13) est essentiellement zéro (Fig. 5).

12. Le régulateur selon la revendication 11) **caractérisé en ce que** ledit détecteur de traversées zéro (38) de la tension (Vᵢₙₜ) à travers ledit interrupteur piloté (13) consiste en un comparateur (39) ayant sur une entrée (391) la tension à travers ledit interrupteur piloté (13) et sur l'autre entrée une tension de référence essentiellement égale à zéro.

13. Le régulateur selon l'une quelconque des revendications de 9) à 12) **caractérisé en ce qu'**entre ladite sortie dudit dispositif de contrôle (15) et ladite entrée de contrôle (14) dudit interrupteur piloté (13), est interposé un dispositif de déviation (40) de la fermeture du dispositif (13) comprenant:
- une première entrée reliée électriquement à un circuit de détection des traversées zéro (47) de la tension (Vₐᵤₓ) à travers l'enroulement auxiliaire (8);
- une deuxième entrée reliée électriquement à la sortie dudit dispositif de contrôle (15) de la fermeture dudit interrupteur (13);
- une sortie reliée électriquement à ladite entrée de contrôle (14) dudit interrupteur piloté (13);
ledit dispositif de déviation (40) qui valide la fermeture dudit interrupteur piloté (13) quand la tension (Vₐᵤₓ) à travers l'enroulement auxiliaire (8) est essentiellement zéro (Fig. 6).

14. Le régulateur selon la revendication 13) **caractérisé en ce que** ledit dispositif de déviation (40) consiste en une porte logique OR.

15. Le régulateur selon les revendications 13) ou 14) **caractérisé en ce que** ledit circuit de détection des traversées zéro (47) de la tension (Vₐᵤₓ) à travers ledit enroulement auxiliaire (8) consiste en un comparateur (48) ayant sur une entrée (49) la tension à travers ledit enroulement auxiliaire (8) et sur l'autre entrée une tension de référence essentiellement égale à zéro.

16. Le régulateur selon la revendication 1) **caractérisé en ce que** ledit au moins un interrupteur piloté (13) comprend un interrupteur bidirectionnel.

17. Le régulateur selon la revendication 16) **caractérisé en ce que** ledit interrupteur bidirectionnel consiste en un pont de redresseur à diodes (23) ayant des bornes d'entrée (25, 26) reliées électriquement, au moyen dudit condensateur, audit enroulement auxiliaire (8) et les bornes de sortie (27, 28) reliées électriquement au collecteur et à l'émetteur d'au moins un transistor de puissance (24) ayant sa base qui constitue ladite entrée de contrôle (14) dudit interrupteur piloté (13).

18. Le régulateur selon la revendication 17) **caractérisé en ce que** ledit au moins un transistor de puissance (24) a le collecteur relié électriquement à la borne positive (27) dudit pont de redresseur à diodes (23) et l'émetteur relié électriquement à la borne négative (28) dudit pont de redresseur à diodes (23).

19. Le régulateur selon l'une quelconque des revendications de 9) à 16) **caractérisé en ce qu'**un circuit de redressement (32b) est interposé entre ladite deuxième entrée (18) dudit dispositif de contrôle et ledit enroulement d'induit (5).

20. Le régulateur selon l'une quelconque des revendications de 9) à 16) **caractérisé en ce qu'**un deuxième circuit de redressement (32a) est interposé entre ladite deuxième entrée (18) et ledit enroulement auxiliaire (8).

21. Le régulateur selon l'une quelconque des revendications précédentes **caractérisé en ce que** ledit interrupteur piloté (13) est fermé au moins une fois pour chaque demi-onde de tension (Vₐᵤₓ) à travers l'enroulement auxiliaire (8).
